(19) Europäisches Patentamt
European Patent Office
Office européen des brevets

(11) **EP 2 802 182 A1**

(12) **EUROPEAN PATENT APPLICATION**

(43) Date of publication:
**12.11.2014 Bulletin 2014/46**

(51) Int Cl.:
*H04W 72/12* (2009.01)

(21) Application number: **13305589.7**

(22) Date of filing: **06.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Stanze, Oliver**
  **70435 Stuttgart (DE)**

• **Doetsch, Uwe**
  **70435 Stuttgart (DE)**
• **Weber, Andreas**
  **70435 Stuttgart (DE)**

(74) Representative: **Kleinbub, Oliver et al**
  **Alcatel-Lucent Deutschland AG**
  **Lorenzstr. 10**
  **70435 Stuttgart (DE)**

(54) **A method for scheduling of user terminals to resources, and a base station therefor**

(57) The invention concerns a method for scheduling of user terminals to resources, wherein for at least one resource of said resources, said at least one resource being available for transmission of user data, sums of resource scheduling priorities are determined for the user terminals, sets of scheduled user terminals are determined based on said sums of resource scheduling priorities, said sets of scheduled user terminals are determined for at least two different numbers of control channel symbols, for said sets of scheduled user terminals, an overall data throughput for the user terminals is determined for said at least two different numbers of control channel symbols, and a number of control channel symbols and a set of scheduled user terminals is applied that lead to a highest overall data throughput, and a base station therefor.

Fig. 6

EP 2 802 182 A1

## Description

## Field of the invention

The invention relates to a method for scheduling of user terminals to resources, and a base station adapted to perform said method.

## Background

So-called Frequency Selective Scheduling (FSS) is the state of the art scheduling approach in LTE systems (LTE = Long Term Evolution), as a high data throughput can be achieved by application of frequency selectivity and multi user diversity. In case of Frequency Selective Scheduling, the user terminals provide frequency selective channel feedback. This enables the scheduler to exploit frequency and user diversity by assigning resources to the user terminals which are best suited for these resources. Therefore Frequency Selective Scheduling leads, compared to Round-Robin scheduling, to an increased system performance.

## Summary

Frequency Selective Scheduling shares the available resources among a relatively high fraction of the available user terminals. A high number of allocations per subframe, i.e. scheduled user terminals per subframe, leads to a high signaling overhead, because each allocation has to be signaled on the so-called Physical Downlink Control Channel (PDCCH). Therefore the PDCCH has to be dimensioned in a way that it can carry this high signaling load.

Increasing the number of allocations per subframe leads to an increase in the spectral efficiency until the number of allocations reaches a certain value from which on the spectral efficiency goes into saturation. So, the number of allocations per subframe can be reduced to said certain value, i.e. maximum number of allocations, without significant performance loss, which in turn leads to a much lower load on the PDCCH. Thus, a smaller dimensioning of the PDCCH is possible, which would lead to more user data capacity because the symbol which is not needed for PDCCH can be used for the so-called Physical Downlink Shared Channel (PDSCH).

LTE enables to apply user specific aggregation levels for the signaling messages on the PDCCH. Therefore the required PDCCH capacity for signaling a certain number of allocations not only depends on the number of allocations, i.e. the number of scheduled user terminals, but also on the current channel conditions of the scheduled user terminals. Therefore, fixed configured values for the PDCCH dimensioning and the maximum number of allocations are not suitable to maximize the system performance. Instead optimal values for both parameters have to be dynamically adapted or determined.

There are two solutions for the determination of the PDCCH size and the maximum number of allocations per subframe:

1.) PDCCH dimensioning performed first: In this approach the PDCCH dimensioning is done in a first step, e.g. by static configuration. In the following, the PDCCH dimensioning impacts the scheduling by allowing the scheduling of a further user terminal only if the remaining PDCCH capacity is sufficient to carry the additional signaling. The drawback of this approach is a risk of over-dimensioning of the PDCCH which may lead to unused PDCCH resources. This finally results in a suboptimal system performance.

2.) Scheduling of user terminals performed first: In this approach, the scheduling of user terminals is done in a first step without any restrictions regarding the maximum number of allocations, or only with a quite high maximum number of allocations. Based on the results of the scheduling, the PDCCH dimensioning is done. The drawback of this approach is, that the number of allocation may be selected too high. If a lower number of allocations would be used, a smaller PDCCH size could be used and the potential performance loss may be over-compensated by the additional PDSCH capacity.

The object of the invention is thus to propose a method for scheduling of user terminals to resources which leads to a high overall data throughput of the scheduled user terminals.

A basic idea of the invention is to dynamically co-optimize scheduling, i.e. selecting an appropriate number of allocations, and PDCCH dimensioning. Based on the current radio condition and data throughput, an appropriate value for both parameters number of allocations and PDCCH dimensioning will be determined preferably on a subframe basis.

According to an embodiment of the invention, a scheduler is assumed that calculates resource scheduling priorities for user terminals based e.g. on an expected data throughput for a considered resource and on an average data throughput. The total priority of a user terminal, i.e. the sum of all its resource scheduling priorities serves for determining the set of scheduled user terminals to be served during a subframe. Additionally, the expected data throughput per user terminal and per resource, which can be deduced from frequency selective feedback, is exploited for determining the best PDCCH configuration, i.e. the one with the highest sum capacity or overall data throughput.

The object of the invention is thus achieved by a method for scheduling of user terminals to resources, wherein

- for at least one resource of said resources, said at least one resource being available for transmission of user data, sums of resource scheduling priorities are determined for the user terminals,

- sets of scheduled user terminals are determined based on said sums of resource scheduling priorities,
- said sets of scheduled user terminals are determined for at least two different numbers of control channel symbols,
- for said sets of scheduled user terminals, an overall data throughput for the user terminals is determined for said at least two different numbers of control channel symbols,
- and a number of control channel symbols and a set of scheduled user terminals is applied that lead to a highest overall data throughput.

The object of the invention is furthermore achieved by a base station for scheduling of user terminals to resources, wherein said base station is adapted to

- determine for at least one resource of said resources, said at least one resource being available for transmission of user data, sums of resource scheduling priorities for the user terminals,
- determine sets of scheduled user terminals based on said sums of resource scheduling priorities,
- determine said sets of scheduled user terminals for at least two different numbers of control channel symbols,
- determine for said sets of scheduled user terminals, an overall data throughput for the user terminals for said at least two different numbers of control channel symbols,
- and apply a number of control channel symbols and a set of scheduled user terminals that lead to a highest overall data throughput.

The invention is described in the following within the framework of 3GPP LTE, however as the invention is not restricted to 3GPP LTE or enhancements thereof, but can in principle be applied in other networks that use scheduling principles based on selecting an appropriate number of allocations, and control channel dimensioning, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

**Brief description of the figures**

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows the cumulative distribution function (CDF) of the number of allocations per LTE downlink subframe in dependency of the number of user terminals per cell if FSS is applied.

Fig. 4 schematically shows the spectral efficiency for a modified FSS which limits the maximum number of allocations per subframe to a configurable value.

Fig. 5 schematically shows the impact of PDCCH dimensioning and the maximum number of allocation per subframe on the system performance, i.e. cell-border throughput and spectral efficiency.

Fig. 6 schematically shows an example of a basic method for a co-optimization of scheduling and PDCCH dimensioning according to an embodiment of the invention.

**Description of the embodiments**

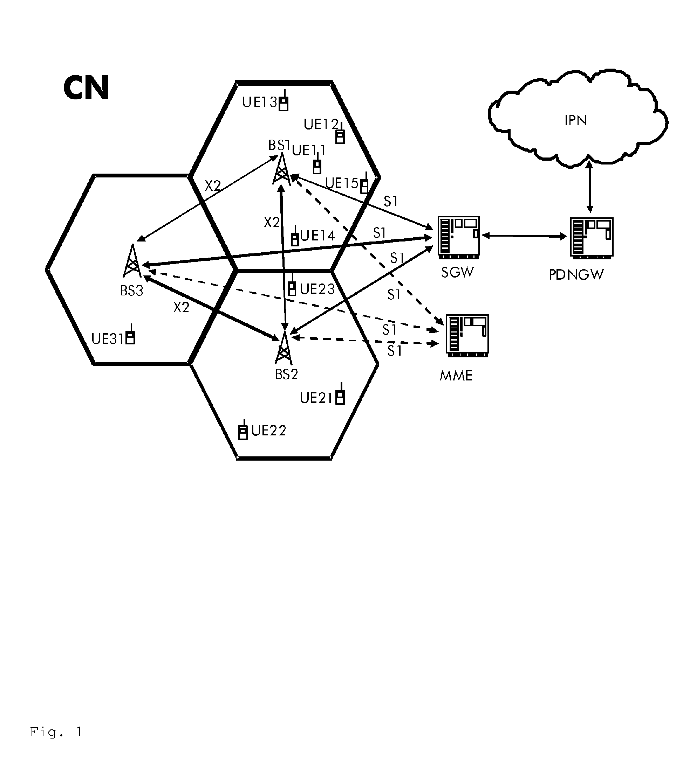

Fig. 1 shows as an example of a communication network in which the invention can be implemented a communication network CN according to the standard 3GPP LTE.

Said communication network CN comprises base stations BS1-BS3, user terminals UE11-UE31, a serving gateway SGW, a packet data network gateway PDNGW, and a mobility management entity MME.

The user terminals UE11-UE15 are connected via radio connections to the base station BS1, the user terminals UE21-UE23 are connected via radio connections to the base station BS2, and the user terminal UE31 is connected via a radio connection to the base station BS3. In future evolutions of LTE, each of the user terminals UE11-UE31 can also be connected via radio connections to multiple of said base stations BS1-BS3.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signaling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1-BS3.

The mobility management entity MME performs tasks of the subscriber management and the session management, and also performs the mobility management during handover between different access networks.

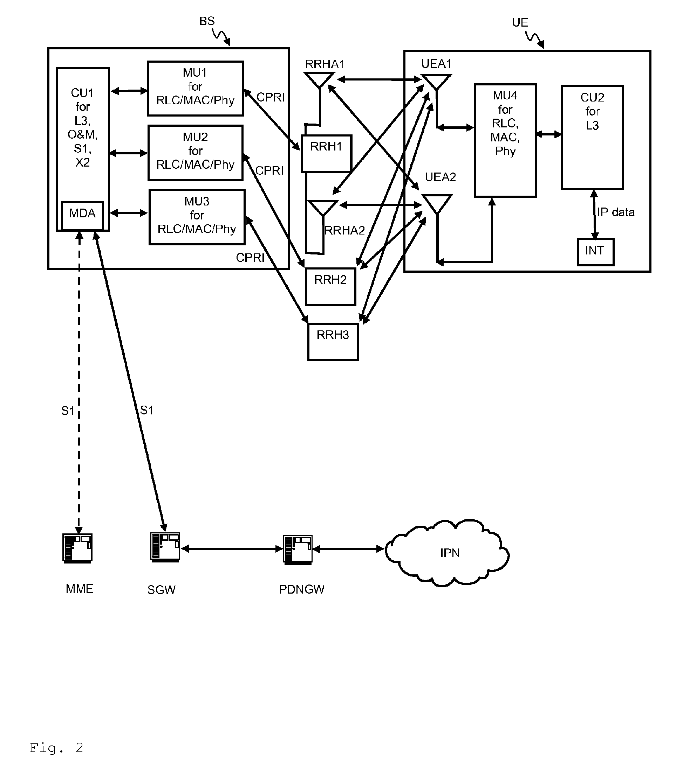

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a socalled Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

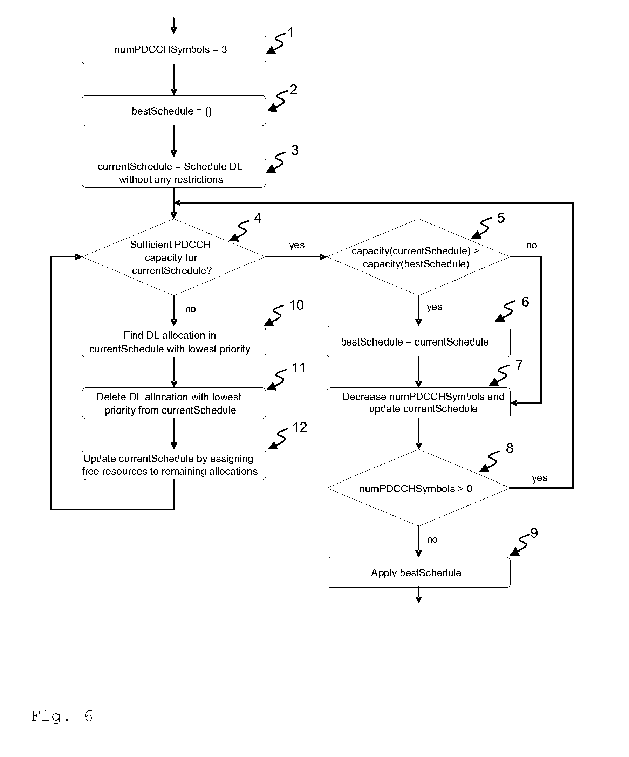

In the sequel, first the shortcomings of a current state of the art scheduling approach using Frequency Selective Scheduling is described, and then in fig. 6, an example of a basic method for a co-optimization of scheduling and PDCCH dimensioning according to an embodiment of the invention is disclosed.

As already mentioned above, in case of FSS the user terminals provide frequency selective channel feedback, which enables the scheduler to exploit frequency and user diversity by assigning resources to the user terminals which are best suited for said resources. Therefore FSS leads, compared to Round-Robin scheduling, to an increased system performance.

For K user terminals in downlink, and an Orthogonal Frequency Division Multiplexing (OFDM) subframe being divided in N so-called resource blocks, a proportional fairness scheduler schedules user terminals at a point in time i based on the fairness metric $F_{k,n}(i)$ indicating resource scheduling priorities for a resource block n of a user terminal k calculated according to the following formula:

$$F_{k,n}(i) = \frac{I_{k,n}(i)}{A_k^{\alpha}(i)}$$

In this formula, $I_{k,n}(i)$ is the instantaneous transmission rate of the user terminal k for the resource block n, which can be determined based on a so-called Channel Quality Indicator (CQI) value $h_{k,n}(i)$ for the resource block n of the user terminal k e.g. based on a modified Shannon capacity equation

$$I_{k,n}(i) = A \log_2(1 + Bh_{k,n}(i))$$

In this formula, A and B are constants representing a deviation from the Shannon capacity equation to account for non-idealities of coding and decoding. A and B are normally set dependent on a target Hybrid Automatic Repeat Request (HARQ) error rate performance.

$A_k(i)$ is the average transmission rate which can e.g. be recursively recalculated according to the following formulae:

$A_k(i+1)=\beta A_k(i)$ if user k not scheduled at point in time i.

$A_k(i+1)=\beta A_k(i)+(1-\beta)I_k(i)$ if user k scheduled at point in time i.

$I_k(i)$ is the aggregated transmission rate of the user terminal k over all resource blocks, $\beta$ is a forgetting factor, and $\alpha$ is an exponential scaling factor. At each point in time i, indicating e.g. a certain Transmission Time Interval TTI, i.e. subframe, total priorities of the user terminals $P_k = \sum_n F_{k,n}(i)$, i.e. the sum of all resource scheduling priorities, i.e. the fairness metrics $F_{k,n}(i)$, of all resource blocks, serves for determining the set of scheduled user terminals to be served during a subframe. Following the FSS selects the user terminal with the highest total priority $P_k = \sum_n F_{k,n}(i)$ and assigns all resources to this user terminal, for which it has the maximum fairness metric $F_{k,n}(i)$. After that the FSS selects the user terminal with the second highest total priority $P_k = \sum_n F_{k,n}(i)$ and assigns from the remaining resource all resource to this user terminal, for which it has the maximum fairness metric $F_{k,n}(i)$. This is repeated until all resources are assigned. So, the maximum number of scheduled user terminals may be equal to the number of available resource blocks.

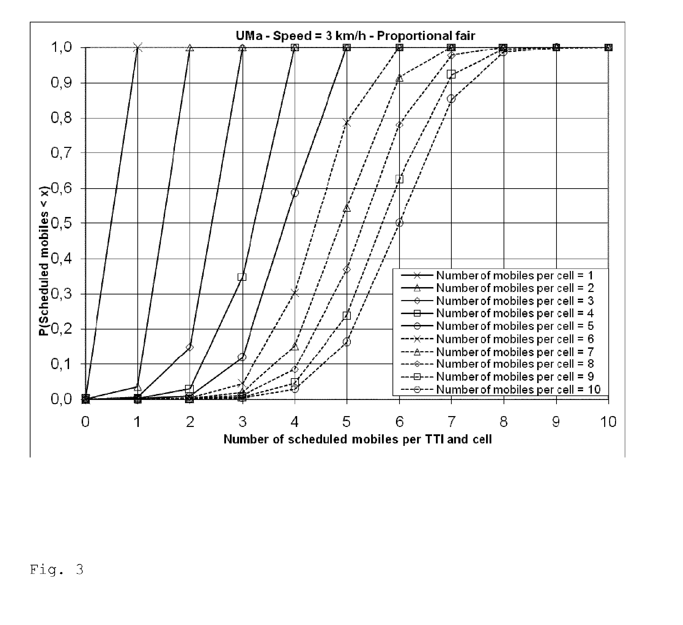

Fig. 3 schematically shows the so-called cumulative distribution function P(scheduled mobiles < x) of the number of allocations per LTE downlink subframe if FSS is applied for a number of user terminals per cell from 1 to 10. The cumulative distribution function describes the probability that the number of scheduled user terminals will be found at a value less than x.

It can be seen that FSS shares the available resources among a relatively high fraction of the available user terminals, e.g. in case of 5 user terminals per cell, 40% of the subframes have at least 4 allocations, i.e. scheduled user terminals, or in case of 10 user terminals per cell, 50% of the subframes have at least 6 allocations, i.e. scheduled user terminals.

A high number of allocations per subframe leads to a high signaling overhead, because each allocation has to be signaled on the PDCCH. Therefore the PDCCH has to be dimensioned in a way that it can carry this high signaling load, and e.g. the maximum of up to 3 PDCCH symbols might be configured.

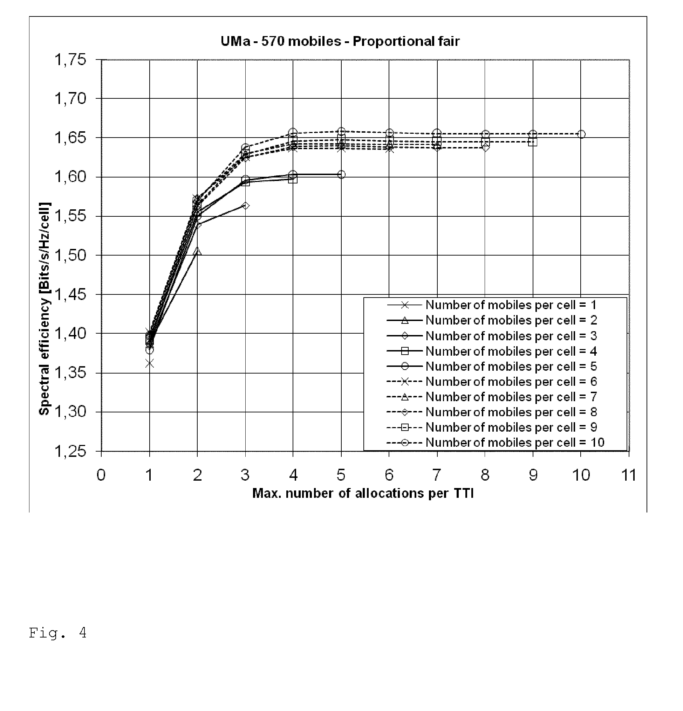

Fig. 4 schematically shows the spectral efficiency for a modified FSS which limits the maximum number of allocations per subframe to a configurable value. The spectral efficiency is depicted over the maximum number of allocations per subframe for a number of user terminals per cell from 1 to 10.

Fig. 4 shows that increasing the number of allocations per subframe leads to an increase in the spectral efficiency until the number of allocations is smaller or equal to 4. A higher number of allocations per subframe does not lead to an additional gain in spectral efficiency. Thus, the number of allocations per subframe can be reduced to a certain value without significant performance loss which leads to a much lower load on the PDCCH. The reduced load on the PDCCH may enable a smaller dimensioning of the PDCCH, e.g. only 2 instead of 3 symbols. A smaller dimensioning of the PDCCH would in turn lead to more user data capacity because the symbol which is no longer needed for the PDCCH can be used for the PDSCH.

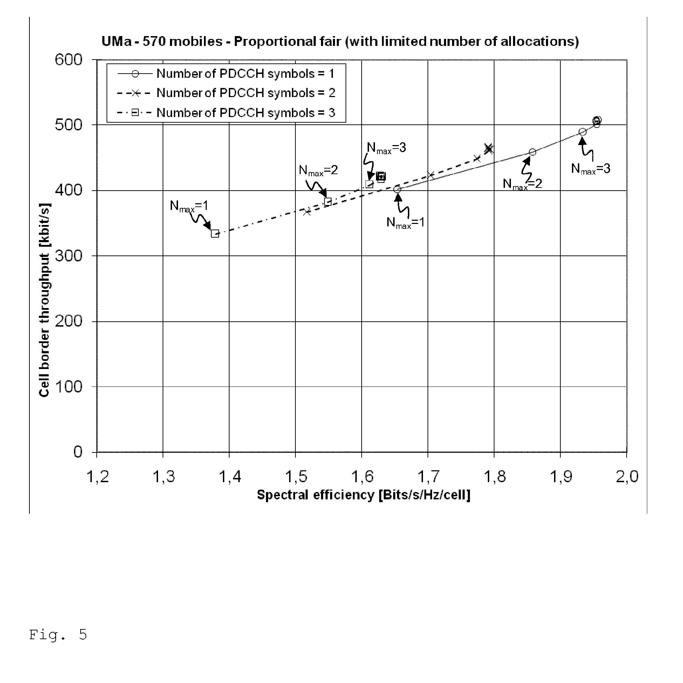

Fig. 5 schematically shows the impact of PDCCH dimensioning and the maximum number of allocation per subframe on the system performance, i.e. cell border throughput and spectral efficiency.

In fig. 5, the cell border throughput is depicted over the spectral efficiency for a maximum number of allocation per subframe $N_{max}$=1 to 10 and for a number of PDCCH symbols from 1 to 3. It can be seen that independent of the PDCCH dimensioning and if the maximum number of allocations is smaller than 4 each additional allocation per subframe leads to higher cell border throughput and higher spectral efficiency.

But fig. 5 also shows that if the reduction of the maximum number of allocations enables a reduction of the PDCCH dimensioning, an overall performance gain may be realized. E.g. the configuration with 2 PDCCH symbols and a maximum of 2 allocations per subframe, i.e. $N_{max}$=2, has the same cell-border throughput and higher spectral efficiency than the configuration with 3 PDCCH symbols and a maximum of 10 allocations per subframe, i.e. $N_{max}$=10. So the additional PDSCH capacity due to the smaller dimensioning of the PDCCH may more than compensate the potential loss due to a lower number of allocations.

LTE enables to apply so-called user specific aggregation levels for the signaling messages on the PDCCH. The number of PDCCH resources, i.e. Control Channel Elements (CCEs), and total PDCCH power are known for each subframe. Multiple CCEs 1, 2, 4 or 8 can be aggregated to achieve different coding rates. The aggregation level needed for a user terminal depends on the channel conditions of the user terminal, and the size of the scheduling grant that must be used for the user terminal. Each user terminal is allocated a candidate set of PDCCH channels for each possible aggregation level. Therefore the required PDCCH capacity for signaling a certain number of allocations not only depends on the number of allocations, i.e. the number of scheduled user terminals, but also on the current channel conditions of the scheduled user terminals. Therefore fixed configured values for the PDCCH dimensioning and the maximum number of allocations are not suitable to maximize the system performance. Instead appropriate values for both parameters have to be dynamically adapted or determined.

As already mentioned above, there are two solutions for the determination of the PDCCH size and the maximum number of allocations per subframe:

1.) PDCCH dimensioning performed first: In this approach the PDCCH dimensioning is done in a first step, e.g. by static configuration. In the following, the PDCCH dimensioning impacts the scheduling by allowing the scheduling of a further user terminal only if the remaining PDCCH capacity is sufficient to carry the additional signaling. The drawback of this approach is a risk of over-dimensioning of the PDCCH which may lead to unused PDCCH resources. This finally results in a suboptimal system performance.

2.) Scheduling of user terminals performed first: In this approach, the scheduling of user terminals is done in a first step without any restrictions regarding the maximum number of allocations, or only with a quite high maximum number of allocations. Based on the results of the scheduling, the PDCCH dimensioning is done. The drawback of this approach is, that the number of allocation may be selected too high. If a lower number of allocations would be used, a smaller PDCCH size could be used and the potential performance loss may be over-compensated by the additional PDSCH capacity.

According to embodiments of the invention, in order to dynamically co-optimize the scheduling, i.e. selecting an appropriate number of allocations, and PDCCH dimensioning, based on the current radio condition and data throughput, an appropriate value for both parameters number of allocations and PDCCH dimensioning will be determined preferably on a subframe basis.

Fig. 6 schematically shows an example of a basic method for a co-optimization of scheduling and PDCCH dimensioning according to an embodiment of the invention.

The embodiment depicted in fig. 6 exemplarily only considers the downlink. The number of allocations in uplink is not optimized, instead it is assumed that the uplink scheduling is done before the described method is executed and therefore it is already known how many PDCCH resources are required by the uplink. Although other approaches are also possible, a proportional fair scheduler is assumed that calculates resource scheduling priorities, i.e. fairness metrics $F_{k,n}(i)$, for a resource block n of a user terminal k based e.g. on an expected data throughput $I_{k,n}(i)$ and on an average data throughput $A_k(i)$ as described above. The total priority of a user terminal, i.e. the sum of all its resource scheduling priorities serves for determining the set of scheduled user terminals to be served during a subframe. Additionally, the expected data throughput $I_{k,n}(i)$ per user terminal and per resource, which can be deduced from a frequency selective feedback, as e.g. a Channel Quality Indicator (CQI) value $h_{k,n}(i)$, is exploited for determining the best PDCCH configuration, i.e. the one with the highest sum capacity or overall data throughput. In an alternative of the embodiment, a PDCCH configuration with the highest total priority of all user terminals

$$P(i) = \sum_n \arg\max_k F_{k,n}(i)$$ is taken as the best PDCCH configuration.

In step 1, when the method is started, it considers a PDCCH size of 3 symbols per subframe, which is the maximum in the current LTE standard, i.e. a parameter numPDCCHSymbols indicating the PDCCH size is set to 3.

In step 2, a parameter bestSchedule indicating the best scheduling decision with the highest sum capacity or overall data throughput, i.e. with the highest sum data throughput of all user terminals, is instantiated.

In step 3, a DL scheduling is performed based on the total priorities of the user terminals

$$P_k = \sum_n F_{k,n}(i)$$ as described above. Thus, the sum of all resource scheduling priorities, i.e. the fairness metrics $F_{k,n}(i)$, of all resource blocks, serves for determining the set of scheduled user terminals to be served during a subframe as a starting point without any restrictions. A parameter currentSchedule indicating the momentary scheduling decision is set to said set of scheduled user terminals determined without any restrictions.

In step 4, it is checked whether there is sufficient PDCCH capacity to signal the corresponding scheduling decision for the set of scheduled user terminals indicated by the parameter currentSchedule. Here, the PDCCH resources required to signal the UL scheduling which has been determined before is considered, i.e. the PDDCH capacity for signaling DL scheduling is reduced by the PDCCH resources required to signal the UL scheduling.

If the PDCCH capacity is sufficient to signal the corresponding scheduling decision for the set of scheduled user terminals indicated by the parameter currentSchedule, then in step 5, it is checked if the set of scheduled user terminals indicated by the parameter currentSchedule has the highest sum capacity or overall data throughput checked so far. The sum capacity S, i.e. overall data throughput, can be calculated according to the following formula:

$$S = \sum_{k,n} I_{k,n}(i)$$

with $I_{k,n}(i)$ being the transmission rate for the resource block n of the user terminal k, which can e.g. be calculated according to the modified Shannon capacity equation described above.

If the set of scheduled user terminals indicated by the parameter currentSchedule has the highest sum capacity checked so far, then in step 6, the parameter bestSchedule indicating the best scheduling decision with the highest sum capacity is set to the set of scheduled user terminals indicated by the parameter currentSchedule.

Following, in step 7, the number of PDCCH symbols is reduced by 1, and the parameter currentSchedule indicating the scheduling decision is updated by adding free resources from removing the PDCCH symbol to the DL allocations. By reducing the size of the PDCCH by one symbol, the size of the PDSCH is increased by on symbol. Thereby $I_{k,n}(i)$ changes, because the size of the resource block is changed. So the user terminals can simply increase the number of scheduled bytes by the additional capacity, if they still have pending data. If a user terminal has no more pending data, certain resource blocks might become unused. In this case the unused resources are scheduled to the user terminal of the already scheduled user terminals, which has the highest priority for this resource block and which has still pending data.

In step 8, it is checked if the parameter numPDCCHSymbols indicating the PDCCH size is greater than 0. If this is the case, the process restarts with step 4.

If the parameter numPDCCHSymbols indicating the PDCCH size is not greater than 0, i.e. all valid PDCCH sizes have been checked, in step 9, the set of scheduled user terminals with the best sum capacity indicated by the parameter bestSchedule and the corresponding PDCCH size are applied.

If the PDCCH capacity checked in step 4 is not sufficient to signal the corresponding scheduling decision for the set of scheduled user terminals indicated by the parameter currentSchedule, then in step 10, the DL allocation with a lowest total priority $P_k = \sum_n F_{k,n}(i)$ is identified.

In step 11, the DL allocation with the lowest total priority $P_k = \sum_n F_{k,n}(i)$ is removed. In an alternative of the embodiment, the DL allocation, i.e. user terminal, with the lowest data throughput or lowest elapsed time since a last scheduling is removed. In a further alternative of the embodiment, the DL allocation is removed based on a type of transmission, e.g. initial transmission or retransmission.

In step 12, the parameter currentSchedule indicating the scheduling decision is updated and the corresponding free resources from removing the DL allocation with the lowest total priority $P_k = \sum_n F_{k,n}(i)$ are added to the remaining DL allocations. Thereby each of the resources of the DL allocation with the lowest total priority $P_k = \sum_n F_{k,n}(i)$ is scheduled to the user terminal of the still scheduled user terminal which still has pending data and which has the highest priority for this resource.

Then, it is again checked in step 4 whether there is sufficient PDCCH capacity to signal the corresponding scheduling decision for the set of scheduled user terminals indicated by the parameter currentSchedule.

In a further embodiment the described method is enhanced by also optimizing the number of allocations in uplink. In principle the method is similar to the method described above in fig. 6, but also uplink allocations might be removed in step 11 as described above if the PDCCH capacity is not sufficient detected in step 4 as described above. Additionally the check performed in step 5 as described above whether the scheduling decision maximizes the capacity has to consider the uplink capacity as well.

In the embodiments described above and depicted e.g. in fig. 6, the corresponding processing steps can be performed e.g. in the modem unit boards MU1-MU3 and the control unit board CU1 of the base station BS as depicted in fig. 2 and described above.

**Claims**

1. A method for scheduling of user terminals (UE11-UE15) to resources, wherein

   • for at least one resource of said resources, said at least one resource being available for transmission of user data, sums of resource scheduling priorities are determined for the user terminals,
   • sets of scheduled user terminals are determined based on said sums of resource scheduling priorities,
   • said sets of scheduled user terminals are determined for at least two different numbers of control channel symbols,
   • for said sets of scheduled user terminals, an overall data throughput for the user terminals is determined for said at least two different numbers of control channel symbols,
   • and a number of control channel symbols and a set of scheduled user terminals is applied that lead to a highest overall data throughput.

2. A method according to claim 1, wherein, if a capacity of the control channel symbols is not sufficient for signaling a set of scheduled user terminals, at least one user terminal is removed from the set of scheduled user terminals for at least one of a group of uplink transmission and downlink transmission.

3. A method according to claim 2, wherein said at least one user terminal is removed from the set of scheduled user terminals dependent on at least one of the group of at least one data throughput of the at least one user terminal, at least one sum of resource scheduling priorities of the at least one user terminal, at least one elapsed time since a last scheduling of the at least one user terminal, and a type of transmission of said at least one user terminal.

4. A method according to claim 3, wherein at least one resource assigned to said at least one user terminal which is removed from the set of scheduled user terminals is assigned to at least one user terminal of a set of remaining scheduled user terminals.

5. A method according to any of the preceding claims, wherein said resources are at least one of the group of uplink transmission resources and downlink transmission resources.

6. A method according to claim 5, wherein said overall data throughput for the user terminals is based on both overall uplink data throughput and overall downlink data throughput.

7. A method according to claims 5 and 4, or claims 6, 5 and 4, wherein said at least one resource assigned to said at least one user terminal which is removed from the set of scheduled user terminals, belongs to at least one of the group of uplink transmission resources and downlink transmission resources.

8. A method according to any of the preceding claims, wherein said scheduling of the user terminals to the resources is performed on a subframe basis of the overall data throughput.

9. A base station (BS1) for scheduling of user terminals (UE11-UE15) to resources, wherein said base station is adapted to

• determine for at least one resource of said resources, said at least one resource being available for transmission of user data, sums of resource scheduling priorities for the user terminals,

• determine sets of scheduled user terminals based on said sums of resource scheduling priorities,

• determine said sets of scheduled user terminals for at least two different numbers of control channel symbols,

• determine for said sets of scheduled user terminals an overall data throughput for the user terminals for said at least two different numbers of control channel symbols,

• and apply a number of control channel symbols and a set of scheduled user terminals that lead to a highest overall data throughput.

10. A communication network for mobile communication comprising at least one base station (BS1) according to claim 9.

Fig. 1

Fig. 2

Fig. 3

UMa - 570 mobiles - Proportional fair

Legend:
— × — Number of mobiles per cell = 1
— △ — Number of mobiles per cell = 2
— ◇ — Number of mobiles per cell = 3
— ☐ — Number of mobiles per cell = 4
— ○ — Number of mobiles per cell = 5
--- × --- Number of mobiles per cell = 6
--- △ --- Number of mobiles per cell = 7
--- ◇ --- Number of mobiles per cell = 8
--- ☐ --- Number of mobiles per cell = 9
--- ⊕ --- Number of mobiles per cell = 10

Spectral efficiency [Bits/s/Hz/cell]

Max. number of allocations per TTI

Fig. 4

Fig. 5

numPDCCHSymbols = 3    1

bestSchedule = {}    2

currentSchedule = Schedule DL
without any restrictions    3

Sufficient PDCCH
capacity for
currentSchedule?    4

yes

capacity(currentSchedule) >
capacity(bestSchedule)    5

no

no

Find DL allocation in
currentSchedule with lowest priority    10

yes

bestSchedule = currentSchedule    6

Delete DL allocation with lowest
priority from currentSchedule    11

Decrease numPDCCHSymbols and
update currentSchedule    7

Update currentSchedule by assigning
free resources to remaining allocations    12

numPDCCHSymbols > 0    8

yes

no

Apply bestSchedule    9

Fig. 6

Europäisches
Patentamt

European
Patent Office

Office européen
des brevets

## EUROPEAN SEARCH REPORT

Application Number

EP 13 30 5589

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TOSHIBA: "Performance evaluation of Rel-10 feedback extensions", 3GPP DRAFT; R1-103282-PERFORMACE EVALUATION OF REL-10 FEEDBACK EXTENSIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510 - 20100514, 7 May 2010 (2010-05-07), XP050598369, [retrieved on 2010-05-07] * page 3, line 27 - page 4, line 6 * * table Table 2. * ----- | 1-10 | INV. H04W72/12 |
| X | NOKIA ET AL: "E-PDCCH design principles", 3GPP DRAFT; R1-114329 E-PDCCH DESIGN PRINCIPLES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20111114 - 20111118, 8 November 2011 (2011-11-08), XP050562195, [retrieved on 2011-11-08] * paragraph [003.] * * paragraph [004.] * ----- | 1-10 | |

TECHNICAL FIELDS SEARCHED (IPC)

H04W

The present search report has been drawn up for all claims

| Place of search | Date of completion of the search | Examiner |
|---|---|---|
| The Hague | 30 September 2013 | Puiulet, Alexandru |

EPO FORM 1503 03.82 (P04C01)